Europäisches Patentamt

European Patent Office

Office européen des brevets

(19)

(11) **EP 0 770 951 A1**

(12) **DEMANDE DE BREVET EUROPEEN**

(43) Date de publication:
**02.05.1997 Bulletin 1997/18**

(51) Int Cl.⁶: **G06F 1/00**

(21) Numéro de dépôt: **96402250.3**

(22) Date de dépôt: **23.10.1996**

(84) Etats contractants désignés:
**DE ES FR GB IT**

(30) Priorité: **23.10.1995 FR 9512454**

(71) Demandeur: **Actikey**
**77300 Fontainebleau (FR)**

(72) Inventeurs:
• **L'Inventeur a renoncé à sa désignation.**

(74) Mandataire: **Benech, Frédéric et al**
**69, Avenue Victor Hugo**
**75783 Paris Cédex 16 (FR)**

(54) **Dispositif de contrôle de l'utilisation d'un logiciel, système comprenant plusieurs de ces dispositifs et procédé de contrôle correspondant**

(57) La présente invention concerne un dispositif (7, 7', 7"), un système et un procédé de contrôle de l'utilisation d'un logiciel, comprenant un circuit électronique à mémoire rémanente à lecture/écriture, connectable aux bornes d'un port parallèle entre un ordinateur (1) et un appareil périphérique (6) et agencé pour traiter et/ou renvoyer des signaux à l'ordinateur en réponse à des signaux émis à partir de ce dernier. Le circuit électronique comporte un compteur de sélection du dispositif propre à identifier ledit dispositif en réponse à un signal de l'ordinateur parmi $n$ dispositifs du même type connectés en série avec ledit dispositif, n étant un entier supérieur ou égal à 2, un circuit automate, et un multiplexeur propre à commander ladite mémoire à lecture/écriture.

## FIG. 1

EP 0 770 951 A1

## Description

La présente invention concerne un dispositif de contrôle de l'utilisation d'un logiciel, comprenant un circuit électronique à mémoire rémanente à lecture/écriture, connectable aux bornes d'un port parallèle entre un ordinateur et un appareil périphérique et agencé pour traiter et/ou renvoyer des signaux à l'ordinateur en réponse à des signaux émis à partir de ce dernier.

Elle concerne également un système de contrôle interactif de l'utilisation de logiciels comprenant au moins deux de ces dispositifs.

Elle concerne encore un procédé de contrôle de l'utilisation de logiciels associés à un tel système.

La présente invention trouve une application particulièrement importante bien que non exclusive dans le domaine de la protection contre la copie de logiciels utilisés sur des micro-ordinateurs.

On connaît déjà des méthodes de protection de logiciels stockés par exemple sur disquettes permettant d'éviter la copie de ces dernières.

Une première méthode de protection consiste à court-circuiter la partie programme du micro-ordinateur qui lit les disquettes.

En effet, les disquettes sont généralement lues pistes par pistes, puis secteur par secteur.

Le système d'exploitation du micro-ordinateur ou DOS (abréviation de Disque Operating System en langage anglo-saxon) ne sait lire que certains types de formatage : par exemple 80 pistes de 15 secteurs de 512 octets, avec un chaînage entre secteurs particulier.

Le programmeur change alors les règles de fonctionnement.

Il demande au DOS de charger son programme normalement, puis le programme court-circuite le DOS et charge lui-même la suite du programme ou certaines données qui ont été écrites sur la disquette dans un autre format.

Le programme marchera donc normalement. Mais l'ordre de copie du DOS sera complètement perturbé par ce formatage inconnu. Il verra alors la disquette comme étant défectueuse, et ce uniquement pendant la copie.

Certains programmeurs ont cependant imaginé avec succès des programmes capables de copier une disquette dans l'état où elle se trouve, et donc quel que soit son formatage.

Une deuxième méthode a donc été proposée.

Elle consiste à marquer la disquette de manière irréversible en détruisant un endroit particulier du support magnétique avec un rayon laser.

Le programme est donc chargé comme précédemment et s'assure de la présence de ce défaut physique sur la disquette.

Quand on demande au DOS ou à d'autres programmes spécialisés de copier la disquette, il est impossible de reproduire le défaut physique sur la disquette recopiée.

Des programmes ont malgré tout été conçus pour recopier ces disquettes ; ils sont aptes à identifier les trous faits au laser et à les émuler.

De plus, les deux méthodes mentionnées ci-dessus empêchent l'utilisateur de faire une copie de sauvegarde de ses programmes.

Certes, le fournisseur garantie le remplacement des disquettes défectueuses quelles qu'en soient les raisons, mais cela reste néanmoins une contrainte.

Une troisième méthode consiste donc plutôt que de modifier la disquette, à marquer l'ordinateur au moyen d'un dispositif électronique, parfois appelé clé.

Le programme, au cours de son exécution, va alors vérifier la présence de cette clé constituée par un circuit électronique qui renvoie des codes lorsqu'il est sollicité.

Ce circuit peut se loger directement dans l'un des connecteurs d'extension de l'ordinateur, ou plus simplement se brancher sur l'une des prises ou ports externes, par exemple celle de l'imprimante sans pour autant perturber le fonctionnement de cette dernière.

On peut ainsi copier le logiciel à volonté. Ce système qui a été encore amélioré en rendant les clés directement programmables grâce à une mémoire rémanente à lecture/écriture est de loin le plus efficace.

Il présente cependant un certain nombre d'inconvénients.

En effet, si plusieurs logiciels protégés par des clés différentes provenant de fournisseurs différents sont chargées dans le disque dur d'un ordinateur, il s'ensuit des difficultés de fonctionnement liées à l'interférence existant entre les clés.

Notamment, si l'utilisateur veut pouvoir faire fonctionner ces logiciels sans avoir à changer systématiquement les clés à utiliser au niveau du port parallèle du micro-ordinateur, il est obligé de les empiler.

Dans ce cas, lorsque les clés sont fournies par un même fournisseur, des interférences sont systématiquement observées, empêchant un fonctionnement correct de l'ensemble.

La présente invention vise à fournir un dispositif de contrôle de l'utilisation d'un logiciel répondant mieux que ceux antérieurement connus aux exigences de la pratique, notamment en ce qu'il permet l'empilage des clés provenant du même fournisseur ou de fournisseurs différents les unes sur les autres en série, sans risques de perturbations.

L'ensemble de clés ainsi constitué devient un système cohérent qui permet de dialoguer, avec une clé précise, suite à une procédure de sélection/adressage en relation avec l'ordre de la clé dans l'ensemble.

Cette fonction permet ainsi à plusieurs logiciels protégés par des clés différentes de disposer simultanément d'un même port parallèle.

Dans ce but, l'invention propose notamment un dispositif de contrôle de l'utilisation d'un logiciel, comprenant un circuit électronique à mémoire rémanente à lecture/écriture, connectable aux bornes d'un port parallèle entre un ordinateur et un appareil périphérique et agencé pour traiter et/ou renvoyer des signaux à l'ordinateur en réponse à des signaux émis à partir de ce dernier, ledit circuit électronique comportant un compteur de sélection du dispositif propre à identifier ledit dispositif en réponse à un signal de l'ordinateur parmi n dispositifs du même type connectés en série avec ledit dispositif, n étant un entier supérieur ou égal à 2, caractérisé en ce que ledit circuit électronique comporte un circuit automate synchrone comprenant des moyens à bascule de sélection dudit dispositif identifié par le compteur, ladite sélection étant agencée pour permettre l'adressage dudit dispositif en fonction de sa position d'ordre $i \le n$ par rapport à l'ordinateur, et un multiplexeur propre à commander ladite mémoire à lecture/écriture à partir des signaux fournis par le compteur et par l'ordinateur lorsque le dispositif est sélectionné.

Dans des modes de réalisation avantageux, on a de plus recours à l'une et/ou à l'autre des dispositions suivantes :

- le compteur comporte une position permettant de tester la présence physique du dispositif sans avoir à interroger la mémoire rémanente à lecture/écriture ;
- le compteur comporte une position permettant au dispositif de prendre la place d'un autre dispositif de contrôle similaire ;
- le dispositif étant placé en position d'ordre $i \le n$ par rapport à l'ordinateur, le circuit automate est programmé pour transmettre à ce dispositif d'ordre $i$ un signal émis par l'ordinateur, en maintenant ledit signal masqué pour les dispositifs d'ordre inférieur jusqu'audit dispositif d'ordre $i$ ;
- l'alimentation du dispositif est prélevée sur trois broches du port parallèle via un circuit à filtre capacitif.

L'invention propose également un système de contrôle interactif de l'utilisation de logiciels comprenant au moins deux dispositifs tels que décrits ci-dessus.

Avantageusement, le système comprend au moins cinq dispositifs tels que décrits ci-dessus, l'empilage de dispositifs pouvant aller jusqu'à vingt dispositifs en série, par exemple sept ou dix.

L'invention propose également un procédé de contrôle de l'utilisation d'un logiciel associé à un dispositif appartenant à un système à plusieurs dispositifs, caractérisé en ce que le dispositif étant placé en position d'ordre $i \le n$ par rapport à l'ordinateur,

on met tous les dispositifs dans un état 1,

on met les $i-1$ premiers dispositifs dans un état 2,

on met le dispositif d'ordre $i$ dans un état 3 en changeant la valeur du compteur pour sélectionner la mémoire rémanente dudit dispositif,

et on fait communiquer en interactif la mémoire rémanente du dispositif d'ordre $i$ avec le logiciel de sorte que ledit logiciel puisse fonctionner.

Avantageusement, on utilise le masquage du signal SLCTI du port parallèle pour les dispositifs d'ordre $i-1$, pour sélectionner le dispositif d'ordre $i$.

L'invention sera mieux comprise à la lecture de la description d'un mode de réalisation donné ci-après à titre d'exemple non limitatif.

La description se réfère aux dessins qui l'accompagnent dans lesquels :

- La figure 1 est une vue en perspective et schématique d'un micro-ordinateur équipé de trois dispositifs selon l'invention branchés en série sur le port parallèle de connexion avec l'imprimante.
- La figure 2 est un schéma bloc général d'un dispositif électronique selon le mode de réalisation de l'invention plus particulièrement décrit.
- Les figures 3, 4 et 5 sont des schémas plus détaillés des éléments essentiels du mode de réalisation de l'invention tel que montré schématiquement sur la figure 2.

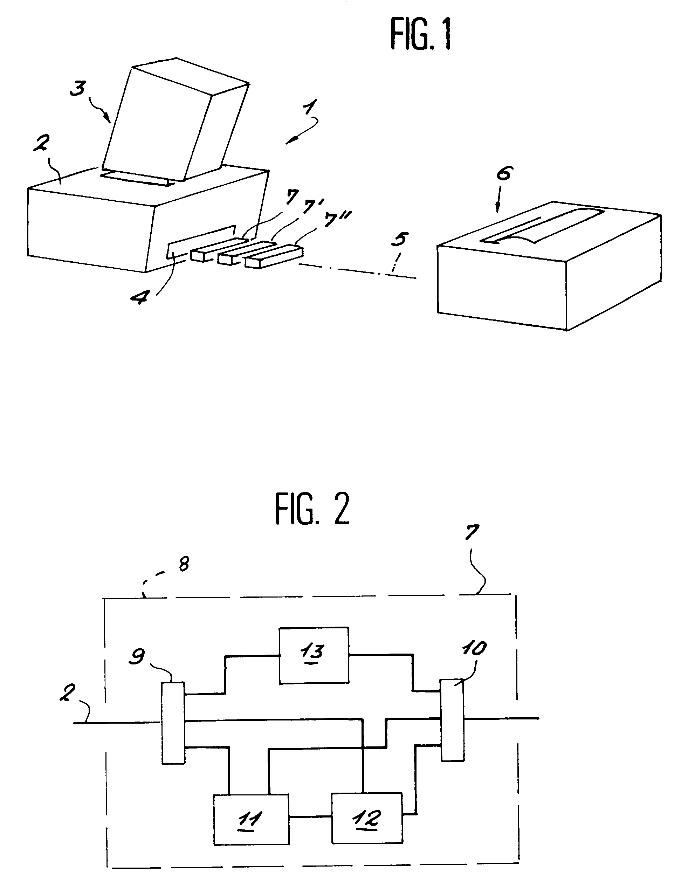

La figure 1 montre un micro-ordinateur 1 comportant un boîtier 2 et un écran 3.

Le boîtier est muni d'une prise 4 à port parallèle de connexion via un câble 5 avec un appareil périphérique qui en l'espèce est une imprimante 6.

Le micro-ordinateur 1 qui est programmé avec trois logiciels protégés est muni sur son port parallèle de trois dispositifs de même type 7, 7' et 7' correspondant respectivement chacun à un logiciel protégé, en forme de connecteur double, branchables sur le port parallèle de l'ordinateur d'un côté et sur un autre boîtier de dispositif ou le câble de l'imprimante 5 de l'autre côté.

Plus précisément, en référence à la figure 2, le dispositif selon le mode de réalisation de l'invention plus particulièrement décrit ici 7 comprend un boîtier 8 muni de deux prises 9 et 10 de branchement pour port parallèle connues en elles mêmes, de type normalisé à 25 broches ("pins" en langage anglo-saxon) du côté du micro-ordinateur et d'un type femelle correspondant du côté imprimante.

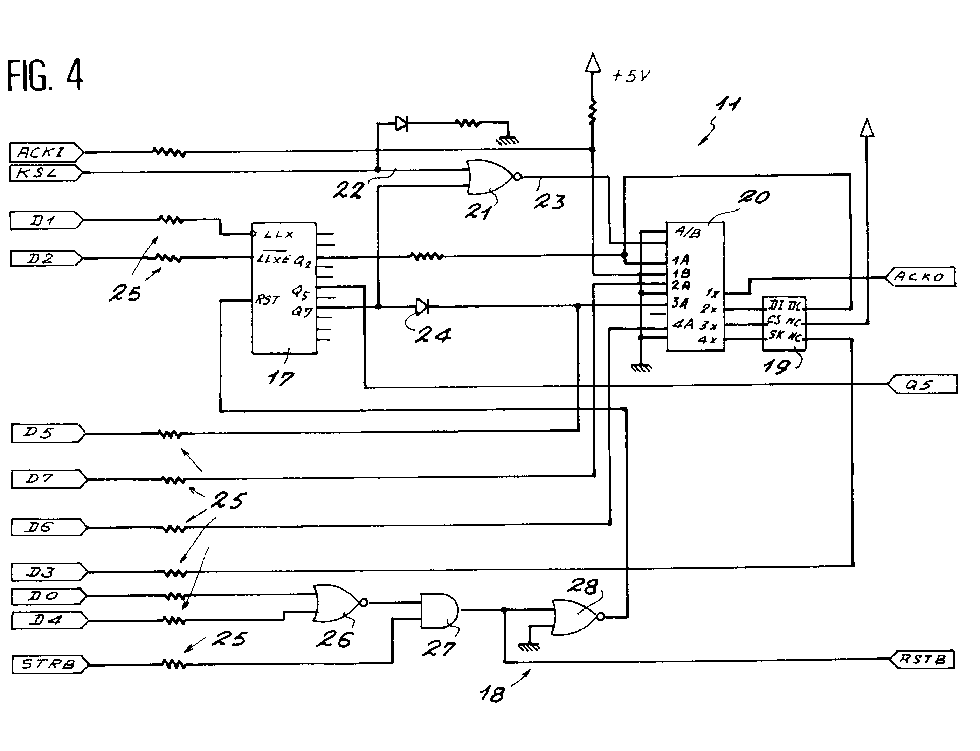

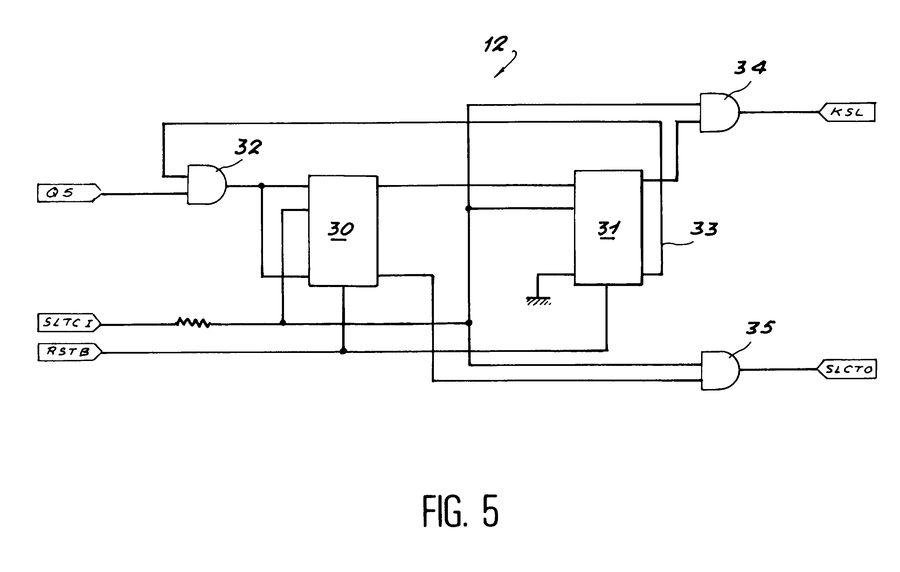

Le dispositif 7 selon l'invention comporte connecté à la prise mâle 9 reliée au micro-ordinateur 2 un circuit 11 qui va être plus particulièrement décrit en référence à la figure 4, lui même raccordé d'une part à la prise femelle 10 et d'autre part au circuit automate de gestion 12 qui va être détaillé en référence à la figure 5.

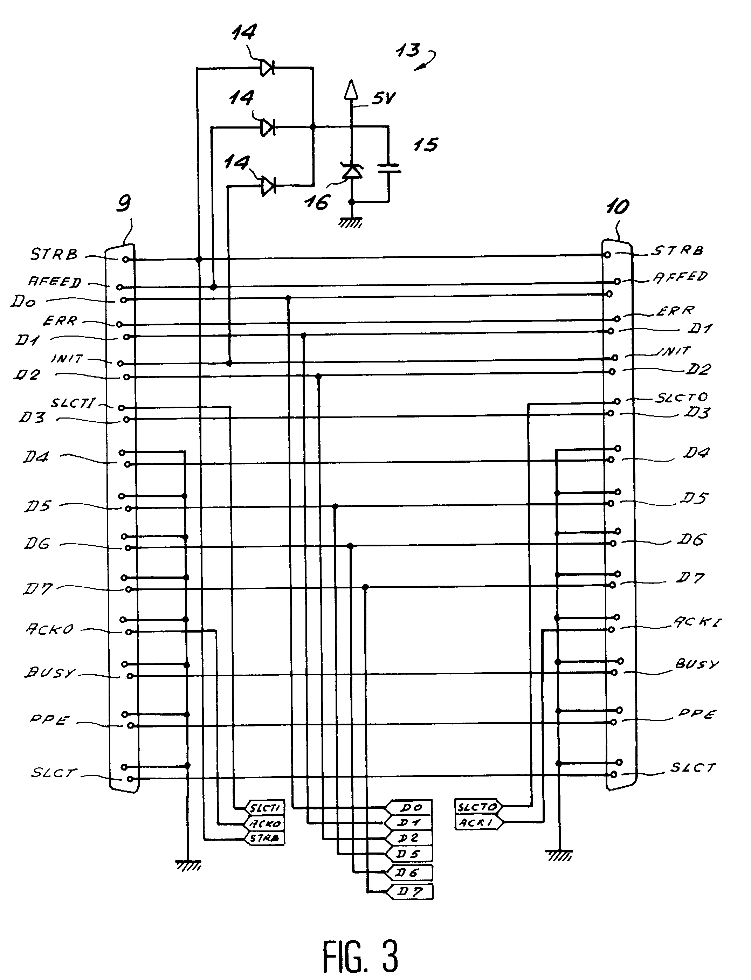

Le circuit électronique du dispositif comporte par ailleurs une alimentation 13 qui va être détaillée plus précisément en référence à la figure 3 en même temps que les connexions des broches 9 et 10 avec le reste des circuits.

On a donc représenté sur la figure 3 les connecteurs 9 et 10 et leurs branchements.

Ceux-ci sont connus et normalisés et les références classiques utilisées, connues de l'homme du métier ont été portées sur la figure.

L'alimentation électrique du dispositif selon l'invention se fait via le circuit 13 comportant des diodes de redressement 14 et un système capacitif connu en lui même alimentant en 5 volt le dispositif et comprenant un condensateur 15 et une diode Zener 16.

Ce circuit prélève l'alimentation sur 3 signaux du port parallèle à savoir et par exemple les broches STRB, AFEED et INIT.

La sortie SLCTI du port parallèle de l'ordinateur est connectée au circuit automate de sélection 12 comme on va le voir en référence à la figure 5.

Les sorties ACKO, STRB, D0, D1, D2, D5, D6 et D7 attaquent quant à elles le coeur du dispositif comme cela va être décrit en référence à la figure 4.

La prise 10 située du côté de l'imprimante est reliée aux sorties référencées par les étiquettes SLCTO et ACKI provenant respectivement des circuits qui sont décrits en référence aux figures 4 et 5.

Le reste de la connectique entre les deux prises 9 et 10 est inchangée par rapport aux besoins de transfert de signaux habituels avec l'imprimante.

Le circuit 11 (cf. figure 4) comporte un compteur 17 du type CD4017 qui est d'une part attaqué par les entrées de données D1 et D2 et d'autre part par un circuit de reset 18 qui va être plus précisément décrit ci-après, les données D1 et D2 et le circuit 18 étant respectivement connectés aux entrées CLX, $\overline{CLXE}$ et RST du compteur.

Le compteur de type CD4017 permet le positionnement à des valeurs précises par activation de ses différentes fonctions matérielles.

Dans le mode de réalisation plus particulièrement décrit ici, le compteur est agencé pour adopter trois positions de comptage, à savoir une première position de comptage Q2 permettant de tester la présence du dispositif ou clé sans avoir à consulter la mémoire rémanente 19 du dispositif constituée par exemple par un circuit EEPROM 9346.

- une deuxième position de comptage Q5 permettant la sélection de la clé d'ordre i̯, en attaquant l'automate de gestion 12 (voir figure 5).
- et une troisième position de comptage Q7 connectée au multiplexeur 20 et agencée pour autoriser le remplacement des clés d'ancienne génération.

Autrement dit, cette position permet au dispositif selon l'invention de présenter à des logiciels protégés par des clés plus anciennes, la possibilité d'utiliser le nouveau dispositif à la place de ces anciennes clés.

Cette compatibilité avec d'autres clés présente un avantage important.

Plus précisément, dans le mode de réalisation de l'invention plus particulièrement décrit ici, la sortie Q7 est d'une part connectée à une porte NON-OU 21 dont l'autre entrée 22 est raccordée à la broche KSL de la prise 9, et dont la sortie 23 est connectée à une borne A/B du multiplexeur et d'autre part, via une diode 24, à une entrée 3A dudit multiplexeur 20.

La donnée D5 est également injectable en aval de la diode sur l'entrée 3A.

Le multiplexeur 20 est par ailleurs attaqué d'une part par la sortie Q2 et d'autre part par les entrées de données D7 et D6.

Le multiplexeur 20, par exemple du type HC257, est par ailleurs connecté à l'alimentation 5V provenant du circuit 13 qui ressort également en ACKI sur la borche 10, et attaque la mémoire EEPROM 19 à accès sériel (broches DI, CS et SK).

Les signaux de commande de la mémoire rémanente EEPROM sont donc les résultats du multiplexage entre des signaux du port parallèle D5, D7, D6 et des états fixes provenant du compteur selon que la clé a été ou non sélectionnée.

On notera que l'isolation de la clé du port est réalisée grâce à des impédances 25 de l'ordre de vingt K$\Omega$, par exemple 22 K$\Omega$.

Plusieurs signaux participent également à l'initialisation du système, notamment des signaux liés aux autres utilisations du port parallèle comme les signaux STRB, D0 et D4 qui, via le circuit 18 à portes, assurent la fonction de reset direct.

Plus précisément et par exemple, le circuit 18 comprend une porte NON-OU 26 connectée d'un côté aux entrées de données D0 et D4 provenant de la broche 9 et raccordée en sortie à une porte ET 27 d'additionnement avec le signal STRB.

La porte ET 27 alimente à son tour d'une part une porte NON-OU 25 elle même connectée en sortie au compteur 17 (broche RST), et d'autre part l'automate 12 (étiquette RSTB).

On va maintenant décrire l'automate 12 de gestion connecté via les sorties RSTB, KSL et Q5 au circuit 11 de la figure 4, en référence à la figure 5.

Celui-ci comprend deux circuits intégrés identiques du type DUAL JK Bistables 30 et 31, par exemple constitués par des circuits 74HCT73.

Ils sont montés en série selon un schéma qui est par exemple du type suivant.

Le signal issu de Q5 (sortie du compteur 17) attaque une entrée de la porte ET 32, dont l'autre entrée est montée en dérivation et connectée à la sortie 33 du deuxième circuit 31.

La sortie de la porte ET 32 vient quant à elle attaquer le premier circuit 30 également connecté à l'entrée SLCTI issue de la broche 9, et qui alimente également d'une part le circuit 31, et d'autre part une deuxième porte ET 34, dont l'autre entrée est connectée au circuit 31, et qui est ainsi agencée pour effectuer la sommation des signaux issus des deux circuits 30 et 31 et donner le signal de sortie KSL qui, via la porte NON-OU 21 (voir figure 4) attaque le multiplexeur 20.

De même, le signal SLCTO qui sort vers la broche 10 est issu de la sommation des signaux provenant des circuits 30 et 31, via la porte ET 35, le signal proprement dit du circuit 31 étant également connecté en dérivation avec l'entrée SLCTI.

Un tel montage donné ici à titre d'exemple non limitatif, permet la hiérarchisation de transmission des signaux d'évolution des états en fonction de la position du dispositif dans l'ensemble des dispositifs présents sur le port parallèle.

Il s'agit donc d'un automate synchrone, le signal dévolution (horloge) étant le signal SLCTI du port parallèle.

Pour une clé d'ordre i dans l'ensemble connecté au port parallèle du micro-ordinateur, ce signal est maintenu masqué par les clés d'ordre inférieur jusqu'à ce que la clé d'ordre i soit sélectionnée.

Il est possible de résumer le fonctionnement de l'automate de la façon suivante :

Etat 0 : Etat initial ;
    La clé n'est pas sélectionnée ;
    Le signal SLCTI n'est pas masqué vers les clés suivantes.
Transition 0 vers 1 :
    Si position de comptage = 5 (Q5).
Etat 1 : La clé n'est pas sélectionnée ;
    Le signal SLCTI est masqué.
Transition 1 vers 2 :
    Si position de comptage = 5 (Q5).
Transition 1 vers 3 :
    Si position de comptage n'est plus égale à 5.
Etat 2 : La clé n'est pas sélectionnée ;
    Le signal SLCTI n'est plus masqué ;
    La clé concernée devient transparente pour les opérations à effectuer avec la clé suivante ;
Etat 3 : La clé est sélectionnée ;
    Le signal SLCTI est alors maintenu masqué jusqu'à la fin de la sélection.

Les polarités de certains signaux, notamment du signal SLCTI sont par ailleurs choisies de manière à éviter toute variation de transition d'états inattendus.

Les portes NON-OU et ET utilisées sont par exemple des portes 74HCT02 et 74HCT08.

Comme indiqué ci-avant, le stockage mémoire est réalisé grâce à une mémoire rémanente à lecture/écriture du type EEPROM.

Cette mémoire est par exemple organisée selon le tableau N°1 ci-après, les registres 4 à 31 étant par exemple agencés pour être cryptés.

| TABLEAU 1 | | |
|---|---|---|
| No | Nom du Registre | Adresse du Registre |
| 00 | Flag | Flag ou Signature. Cette valeur permet de localiser une clé en fonction du fournisseur |
| 01 | Serie0 | No de Série 0 ou poids fort |
| 02 | Serie1 | No de Série 1 ou poids faible ; Il est utilisé pour le cryptage de la clé, par exemple si le bit 3 de configuration est égale à 0 |
| 03 | COnfig | Configuration |
| 04 | Distrib | Référence du distributeur |
| 05 | DateFab | Date de Fabrication |
| 06 | NClient | No de client |

| 07 | Drap | Drapeau |
|----|------|---------|
| 08 | Editeur0 | Code 0, code Editeur poids fort |
| 09 | Editeur1 | Code 1, code Editeur poids faible |
| 10 | Editeur 2 | Editeur 2 |
| 11 | AdresseEditeur | Adresse de la clé, indiquant le début et la fin accessibles par l'éditeur. Les bits de 12 à 15 sont par exemple multipliés par 4 et indiquent l'adresse du 1er registre accessible par l'éditeur et le développeur (SSII...) et les bits de 0 à 11 indiquent le dernier registre accessible. |
| 12 | SSII0 | code SSII0 |
| 13 | SSII1 | code SSII1 |
| 14 | SSII2 | code SSII2 |
| 15 | AdresseNSSII | Indique le nombre de registres réservés à la SSII ; ce nombre est inférieur au nombre de registre de l'éditeur, le dernier enregistrement de la SSII correspondant par exemple au dernier registre de l'éditeur. |
| 16 | Utilisateur | Utilisateur final 0 |
| 17 | Utilisateur 1 | Utilisateur final 1 |
| 18 | Adresse fabricant | Indique le nombre de registres accessibles en début et le dernier par le fabricant de la clé. |
| 19 | Adresse 1$^{er}$RegW | Indique le 1er registre |

| | | |
|---|---|---|
| | | accessible en écriture par l'éditeur ou la SSII |
| 20 | Compteur | Compteur |
| 21 | Mémoire | Indique le type de mémoire |
| 22 | Net0 | RESEAU |
| 23 | Key0 | Clé de cryptage |
| 24 | Key1 | Clé de cryptage |
| 25 | Key2 | Clé de cryptage |
| 26 | Key3 | Clé de cryptage |
| 27 | Key4 | Clé de cryptage |
| 28 | Key5 | Clé de cryptage |
| 29 | Key6 | Clé de cryptage |
| 30 | Key7 | Clé de cryptage avec checksum |
| 31 | ChCk | Checksum et Configuration |

A titre d'exemple on a donné également et plus précisément le contenu des registres RadConf et RadChCK dans les tableaux 2 et 3 ci-après.

| TABLEAU 2 - Config | |
|---|---|
| REGISTRES | CONTENU |
| 12 à 10 | Taille de la mémoire |
| 09 et 08 | Type de composants (Discret, ... Microprossesseur) |
| 07 | Sortie de données |
| 06 | Horloge avec ou sans |
| 05 | Registre Protection avec ou sans |
| 04 | Multi-Protection avec ou sans |

| TABLEAU 2 - Config | |
|---|---|
| REGISTRES | CONTENU |
| 03 | Cryptage clé avec ou sans |
| 02 à 00 | Type de clé |

| TABLEAU 3 - ChCK | | | | | | | | | | | | | | | |
|---|---|---|---|---|---|---|---|---|---|---|---|---|---|---|---|
| 15 | 14 | 13 | 12 | 11 | 10 | 09 | 08 | 07 | 06 | 05 | 04 | 03 | 02 | 01 | 00 |
| Checksum de 31 premier registres | | | | | | | | Utilisateur-Programmateur<br>0000 : X<br>0001 : Y<br>0010 : Z<br>0011 : T<br>0100 : W<br>0101 : V<br>0110 : A<br>0111 : B<br>1000 : C<br>1001 : D<br>1010<br>1011<br>1100 : Modem<br>1101<br>1110 : Super-Utilisateur<br>1111 : Super-Utilisateur | | | | Années supplémentaires si clé avec horloge | | | |

Pour améliorer encore la protection par cryptage complémentaire, il est possible de prévoir un logiciel permettant le stockage en mémoire en partant de la fin vers le début ce qui autorise alors une protection du logiciel et des données concernées par l'utilisation du registre de protection lorsque la mémoire en possède un.

On va maintenant décrire le procédé d'utilisation du système de dispositif ou clés selon l'invention.

Dans un premier temps rappelons la méthode mise en oeuvre pour la protection d'un programme avec un dispositif ou clé du type selon l'invention.

Le fabricant de la clé programme les registres mémoire du circuit électronique de la clé en fonction du client, en général un développeur ou programmeur, souhaitant protéger son propre programme d'application spécifique, dit programme principal, lors de la vente de ce dernier à un tiers, client final.

Simultanément, le fabricant vend au développeur un programme dit accompagnateur propre à être intégré au programme principal et destiné à appeler la clé et vérifier notamment le contenu programmé des registres de ladite clé, lors de l'exécution du programme principal.

Ce sont ces registres qui dans le mode de réalisation de l'invention plus particulièrement décrit ici correspondent au tableau n° 1.

Le développeur intègre alors à son programme le programme accompagnateur, par exemple en quatre endroits différents du programme.

Eventuellement le développeur programme à nouveau des instructions supplémentaires dans les registres du circuit intégré.

Ce sont notamment ces instructions qui peuvent donc être mises pour améliorer la protection à partir de la fin vers le début, comme décrit ci-avant.

Le développeur va ensuite vendre au client final le programme principal et le programme accompagnateur incorporé.

Le client final ne pourra ainsi faire fonctionner le programme principal qu'avec la clé connectée à l'ordinateur mettant en oeuvre le programme.

L'utilisation d'une mémoire EEPROM permet aujourd'hui aux fabricants, aux développeurs et éventuellement au client final de programmer les registres mémoire de la clé à partir du clavier même de l'ordinateur.

Dans le cadre de la présente invention, il s'agit donc d'un dispositif qui peut être ou encore qui est mis en oeuvre dans un système comprenant plusieurs dispositifs empilables dont le fonctionnement est du type suivant,le problème étant de pouvoir sélectionner, désélectionner la clé qui doit être utilisée par le logiciel protégé et qui est située à la position $i$.

- Il est tout d'abord toujours conseillé de commencer par un reset global du système (circuit 18).
- On met ensuite toutes les clés dans un état 1 et pour cela on compte jusqu'à cinq (le compteur 17) puis on effectue une transition sur le signal de sortie SLCTI du port parallèle.
- On met ensuite les i-1 premières clés de l'ensemble dans l'état 2.

Pour cela sans modifier le compteur, on effectue une transition par clé sur le signal SLCTI, c'est à dire i-1 transitions.

Par transition il convient d'entendre un changement d'état du signal, comme par exemple lorsque le signal passe de 0 à 1.

- On positionne alors la clé située dans la position $i$ dans l'état 3.

Pour cela, on change la valeur du compteur de sorte que la valeur de comptage ne soit plus 5 par exemple en comptant une unité vers 6, puis on effectue une transition sur le signal SLCTI.

La clé en position $i$ est alors sélectionnée.

Tous les accès à la mémoire EEPROM 19 concernent donc maintenant la mémoire rémanente propre à cette clé $i$.

En dehors de cette sélection, aucune donnée EEPROM n'est donc accessible.

- Pour désélectionner la clé, il est effectué une réinitialisation en utilisant l'un des moyens décrits ci-avant.

Auquel cas toutes les clés sont remises à l'état d'attente initial appelé état 0.

Une telle procédure n'est pas cumulative, c'est à dire qu'il est nécessaire de réinitialiser toutes les clés avant d'opérer une nouvelle sélection.

Avantageusement une fonction de compatibilité dite de compatibilité historique a été implémentée selon l'invention de manière à permettre à des logiciels protégés par d'anciennes clés de fonctionner avec la nouvelle clé. Pour ce faire, la nouvelle clé plus complète que l'ancienne, n'utilise qu'une partie de ses circuits, à savoir le compteur et l'EEPROM programmé pour simuler le fonctionnement de la clé plus ancienne.

Dans ce cas, ladite clé fonctionne sans nécessité de sélection préliminaire par la méthode telle que décrite ci-dessus.

La fonction d'empilage en cascade n'est cependant plus opérationnelle.

La sélection de la mémoire rémanente concernée est alors faite grâce au comptage de la valeur 7 mentionnée ci-avant.

Dans un mode de réalisation avantageux, la clé selon l'invention intègre une fonction dite timer temps effectif.

Ce timer compte les secondes, les minutes, les heures, les jours et les mois.

Il peut par exemple être constitué par un circuit PCF8582 à accès sériel de type 12C.

L'adressage du timer se fait après sélection de la clé adressée, puis positionnement du compteur de sélection sur une valeur 9.

La sélection d'une telle variante est identique à celle décrite ci-avant.

Comme il va de soi et comme il résulte d'ailleurs de ce qui précède, la présente invention ne se limite pas aux modes de réalisation plus particulièrement décrits, mais en embrasse au contraire toutes les variantes et notamment celle ou les différents circuits intégrés connectés en série les uns aux autres de façon discrète font l'objet d'un circuit spécifique intégrant toutes les fonctions recherchées.

**Revendications**

1. Dispositif (7) de contrôle de l'utilisation d'un logiciel, comprenant un circuit électronique à mémoire rémanente (19) à lecture/écriture, connectable aux bornes d'un port parallèle entre un ordinateur (1) et un appareil périphérique (6) et agencé pour traiter et/ou renvoyer des signaux à l'ordinateur en réponse à des signaux émis à partir de ce dernier, ledit circuit électronique comportant un compteur (17) de sélection du dispositif propre à identifier ledit dispositif en réponse à un signal de l'ordinateur parmi n dispositifs du même type connectés en série avec ledit dispositif, n étant un entier supérieur ou égal à 2, caractérisé en ce que ledit circuit électronique comporte un circuit automate (12) synchrone comprenant des moyens à bascule de sélection dudit dispositif identifié par le compteur, ladite sélection étant agencée pour permettre l'adressage dudit dispositif en fonction de sa position d'ordre $i \leq n$ par rapport à l'ordinateur,
et un multiplexeur (20) propre à commander ladite mémoire à lecture/écriture à partir des signaux fournis par le compteur et par l'ordinateur lorsque le dispositif est sélectionné.

2. Dispositif selon la revendication 1, caractérisé en ce que le compteur comporte une position (Q2) permettant de tester la présence physique du dispositif sans avoir à interroger la mémoire rémanente à lecture/écriture.

3. Dispositif selon l'une quelconque des revendications précédentes, caractérisé en ce que le compteur comporte une position (Q7) permettant au dispositif de prendre la place d'un autre dispositif de contrôle similaire.

4. Dispositif selon l'une quelconque des revendications précédentes, caractérisé en ce que le dispositif étant placé en position d'ordre $i \leq n$ par rapport à l'ordinateur,
le circuit automate (12) est programmé pour transmettre à ce dispositif d'ordre $i$ un signal émis par l'ordinateur, en maintenant ledit signal masqué pour les dispositifs d'ordre inférieur jusqu'audit dispositif d'ordre $i$.

5. Dispositif selon l'une quelconque des revendications précédentes, caractérisé en ce que l'alimentation du dispositif est prélevée sur trois broches du port parallèle via un circuit (13) à filtre capacitif.

6. Système de contrôle interactif de l'utilisation de logiciels caractérisé en ce qu'il comprend au moins deux dispositifs (7, 7', 7') selon l'une quelconque des revendications précédentes.

7. Système selon la revendication 6, caractérisé en ce que il comprend au moins cinq dispositifs selon l'une quelconque des revendications 1 à 5.

8. Procédé de contrôle de l'utilisation d'un logiciel associé à un dispositif (7) appartenant à un système à plusieurs dispositifs selon l'une quelconque des revendications 6 et 7, caractérisé en ce que
le dispositif étant placé en position d'ordre $i \leq n$ par rapport à l'ordinateur,
on met tous les dispositifs dans un état 1,
on met les $i$-1 premiers dispositifs dans un état 2,
on met le dispositif d'ordre $i$ dans un état 3 en changeant la valeur du compteur (17) pour sélectionner la mémoire rémanente (19) dudit dispositif,
et on fait communiquer en interactif ladite mémoire dudit dispositif d'ordre $i$ avec ledit logiciel de sorte que ledit logiciel peut fonctionner.

9. Procédé de contrôle selon la revendication 8, caractérisé en ce que on utilise le masquage du signal SLCTI du port parallèle pour les dispositifs d'ordre $i$-1, pour sélectionner le dispositif d'ordre $i$.

# FIG. 1

# FIG. 2

FIG. 3

FIG. 4

FIG. 5

EP 0 770 951 A1

**Office européen des brevets**

# RAPPORT DE RECHERCHE EUROPEENNE

Numero de la demande

EP 96 40 2250

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | ELECTRONIQUE RADIO PLANS, no. 528, 1 Novembre 1991, pages 75-78, XP000266390 GUEULLE P: "UN "DONGLE" A PUCE DE TELECARTE" * figure 1 * * page 76, colonne de gauche, ligne 47 - page 77, colonne du milieu, ligne 22 * * page 78, colonne de gauche, ligne 11 - ligne 20 * | 6,7 | G06F1/00 |
| A | | 1,5,8 | |
| | --- | | |
| Y | US-A-4 562 306 (CHOU WAYNE W ET AL) 31 Décembre 1985 * abrégé; figures 1-6 * | 6,7 | |
| A | | 1,8 | |
| | --- | | |
| A | EP-A-0 279 733 (MICROPHAR SARL) 24 Août 1988 * abrégé; figure 1 * * colonne 1, ligne 56 - colonne 3, ligne 18 * | 1,2,6-8 | |
| A | * colonne 5, ligne 49 - ligne 63 * --- EP-A-0 404 414 (IBM) 27 Décembre 1990 ----- | | G06F |

DOMAINES TECHNIQUES RECHERCHES (Int.Cl.6)

G06F

Le présent rapport a été établi pour toutes les revendications

| Lieu de la recherche | Date d'achèvement de la recherche | Examinateur |
|---|---|---|
| LA HAYE | 16 Décembre 1996 | Powell, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................
& : membre de la même famille, document correspondant

EPO FORM 1503 03.82 (P04C02)